# EUROPEAN PATENT SPECIFICATION

(11) **EP 3 581 367 B1**
(45) Date of publication and mention of the grant of the patent: **05.05.2021**
(21) Application number: 19152577.3
(22) Date of filing: 07.06.2018
(51) Int. Cl.: B29C 64/393, B29C 64/264, B29C 64/153, B22F 3/105

(54) **METHOD FOR ADDITIVELY MANUFACTURING AT LEAST ONE THREE-DIMENSIONAL OBJECT**
VERFAHREN ZUR GENERATIVEN FERTIGUNG VON MINDESTENS EINEM DREIDIMENSIONALEN OBJEKT
PROCÉDÉ DE FABRICATION ADDITIVE D'AU MOINS UN OBJET TRIDIMENSIONNEL

(43) Date of publication of application: 18.12.2019
(62) Divisional of application: 18176623.9
(73) Proprietor: CL Schutzrechtsverwaltungs GmbH, 96215 Lichtenfels (DE)
(72) Inventor: Werner, Jürgen, 96215 Lichtenfels (DE)
(74) Representative: Hafner & Kohl PartmbB

(56) References cited:
- EP-A1- 2 865 465
- WO-A1-2016/001787
- WO-A1-2016/043900
- WO-A1-2016/138345

## Description

The invention relates to a method for additively manufacturing at least one three-dimensional object by means of successive layerwise selective irradiation and consolidation of build material layers, whereby each build material layer comprises at least one irradiation area which is to be irradiated and consolidated by means of at least one energy beam, whereby the successive layerwise selective irradiation and consolidation of respective irradiation areas is performed on basis of at least one irradiation parameter set resulting in a specific amount of energy input into the irradiation area of a respective build material layer, whereby the at least one irradiation parameter set comprises at least one irradiation parameter. Respective methods for additively manufacturing at least one three-dimensional object, which may be implemented as selective electron beam melting processes or selective laser melting processes, for instance, are known from the technical field of additive manufacturing. It is a known aim to increase the efficiency of respective methods for additively manufacturing three-dimensional objects, i.e. particularly to increase the build rate of additively manufacturing three-dimensional objects. One way to increase the efficiency or build rate, respectively is the implementation of specific irradiation approaches or irradiation strategies, respectively.

In this regard, diverse promising irradiation approaches or irradiation strategies, respectively have been suggested. Yet, there exists an ongoing need for further developing methods for additively manufacturing three-dimensional objects with respect to the efficiency of respective methods for additively manufacturing three-dimensional objects, i.e. particularly with respect to the rate of additively manufacturing three-dimensional objects WO 2016/138345 A1 discloses a method for additively manufacturing a three-dimensional object.

It is the object of the invention to provide a method for additively manufacturing at least one three-dimensional object allowing for increasing the efficiency of additively manufacturing at least one three-dimensional object, i.e. particularly the rate of additively manufacturing at least one three-dimensional object.

This object is achieved by a method for additively manufacturing at least one three-dimensional object according to the independent Claim. The claims depending on the independent Claim relate to possible embodiments of the method according to the independent Claim.

The method described herein is a method for additively manufacturing at least one three-dimensional object ("object") by means of successive layerwise selective irradiation and consolidation of build material layers, i.e. layers of a build material. The build material may be a ceramic, polymer, or metal. The build material may be provided as a powder. The energy beam may be an electron or laser beam, for instance. The build material layers which are to be selectively irradiated and consolidated are successively applied in a build plane of an apparatus for additively manufacturing at least one three-dimensional object which is used for performing the method. The method is thus, performable or performed by an apparatus for additively manufacturing at least one three-dimensional object.

The method may be implemented as a selective laser sintering method, a selective laser melting method, or a selective electron beam melting method, for instance. Yet, it is also conceivable that the method is a binder jetting method, particularly a metal binder jetting method, for instance. The apparatus for performing the method may thus, be embodied as a selective laser sintering apparatus, a selective laser melting apparatus, or a selective electron beam melting apparatus, for instance. Yet, it is also conceivable that the apparatus for performing the method is embodied as a binder jetting apparatus, particularly a metal binder jetting apparatus, for instance.

According to the method, each build material layer comprises at least one irradiation area which is to be irradiated and consolidated by means of at least one energy beam. A respective irradiation area typically, corresponds to the cross-section of an object, which is to be additively manufactured, in the respective build material layer.

The successive layerwise selective irradiation and consolidation of respective irradiation areas is performed on basis of at least one irradiation parameter set. Hence, at least one irradiation parameter set is used for irradiating and consolidating the irradiation areas of respective build material layers which are to be selectively irradiated and consolidated for additively manufacturing the object.

A respective irradiation parameter set comprises at least one irradiation parameter. An irradiation parameter may be a or comprise at least one energy beam parameter of the energy beam used for irradiating respective irradiation areas. A respective energy beam parameter may be or comprise at least one of: the intensity or power of the energy beam, the intensity profile of the energy beam, the (cross-sectional) shape of the energy beam, the focal size or spot size of the energy beam, the focal position or spot position of the energy beam, the energy beam path according to which the energy beam is moved across an irradiation area, the speed with which the energy beam is moved along a respective energy beam path across an irradiation area, the geometrical relationship between respective energy beam paths, particularly the relative orientation of respective energy beam paths, the distance between respective energy beam paths, the degree of overlap of respective energy beam paths, etc. Other energy beam parameters are conceivable.

Each irradiation parameter set results in a specific amount of energy input into the irradiation area of a respective build material layer. In other words, the combination of respective irradiation parameters or energy beam parameters, respectively of a specific irradiation parameter set is correlated with specific amount of energy input into the irradiation area of a respective build material layer. As will be apparent from below, the amount of energy input into the irradiation area of a respective build material layer results in a bond and consolidation, respectively of the irradiation area of the respective build material layer and also in a bond and connection, respectively of the irradiation area of the respective build material layer with the irradiation area of at least one previously selectively irradiated and consolidated build material layer.

According to the method, a first irradiation parameter set and at least one further irradiation parameter set is used for additively manufacturing the object. Hence, in contrast with methods known from prior art, the method described herein implements an irradiation approach or irradiation strategy, respectively which comprises the use of at least two different irradiation parameter sets. The irradiation parameter sets differ in their respective amount of energy input into an irradiation area of a respective build material layer which is to be selectively irradiated and consolidated. Since the amount of energy input into an irradiation area of a respective build material layer which is to be selectively irradiated and consolidated is correlated with respective irradiation parameters or energy beam parameters, respectively defined in the respective irradiation parameter set, the irradiation parameter sets typical differ in at least one irradiation parameter or energy beam parameter, respectively.

According to the method, the first irradiation parameter set allows for a first amount of energy input into an irradiation area of a first build material layer which results in a connection of the irradiation area of the first build material layer with selectively irradiated and consolidated areas of a second build material layer directly disposed below the first build material layer. According to the method, the at least one further irradiation parameter set allows for a further amount of energy input into an irradiation area of a first build material layer which results in a connection of the irradiation area of the first build material layer with the selectively irradiated and consolidated areas of a second build material layer directly disposed below the first build material layer and at least one further build material layer directly disposed below the second build material layer.

Hence, the irradiation parameter sets particularly differ in their respective depths of penetration of the energy input into the irradiation area of a respective build material layer, whereby the first irradiation parameter set typically, has a smaller depth of penetration of the energy input into the irradiation area of a respective build material layer compared with the at least one further irradiation parameter set. This results in that when the first irradiation parameter set is used, only two build material layers being disposed directly on top of each other are bonded and connected, respectively, whereas when the at least one further irradiation parameter set is used at least three build material layers being disposed directly on top of each other are bonded and connected, respectively.

As a consequence, specific sub-areas of irradiation areas may not be irradiated in every build material layer, but only in every n-th layer (n being an integer) since the desired vertical bond or connection of vertically adjacently disposed build material layers may be accomplished by using the at least one further irradiation parameter set when irradiating a further build material layer, e.g. particularly the next build material layer. In other words, some irradiation areas may only be partially irradiated, whereby the partial irradiation is performed on basis of the first irradiation parameter set, since the desired vertical bond or connection of vertically adjacently disposed build material layers may be accomplished by using the at least one further irradiation parameter set when irradiating a further build material layer since the at least one further irradiation parameter set allows for bonding and connecting, at least three vertically adjacently disposed build material layers.

As is apparent from above, the further irradiation parameter set may comprise at least one irradiation parameter resulting in a higher energy input, particularly a higher depth of penetration of the energy input, into the irradiation area of a respective build material layer compared with the first irradiation parameter set. The further irradiation parameter set may thus, comprise a combination of irradiation parameters and energy beam parameters, respectively which result in a higher energy input, particularly a higher depth of penetration of the energy input, into the irradiation area of a respective build material layer compared with the combination of irradiation parameters and energy beam parameters, respectively of the first irradiation parameter set. Merely as an example, the at least one further irradiation parameter set may use an energy beam having a higher energy beam intensity or energy beam power compared with the energy beam of the first irradiation parameter set.

The first irradiation parameter set is applied/used in every build material layer, whereas the at least one further irradiation parameter set is not applied/used in every build material layer. As an example, the at least one further irradiation parameter set may only be applied in every other build material layer. The decision in which build material layers, which respective irradiation parameter set is used is typically, made on basis of the energy input, the respective irradiation parameter set may/shall input into the irradiation area of a respective build material layer, i.e. particularly, the number of vertically adjacently disposed build material layers which may/shall be bonded and connected with the respective irradiation parameter set.

Since it is not necessarily required to irradiate every irradiation area with the same irradiation parameter set and it is particularly, possible to select specific sub-areas of irradiation areas which are not to be irradiated in every build material layer, but only in every n-th layer because the desired vertical bonding or connecting of vertically adjacently disposed build material layers may be accomplished by using the at least one further irradiation parameter set when irradiating a further build material layer, e.g. particularly the next build material layer, the method described herein implements an irradiation approach or irradiation strategy, respectively which may significantly increase the efficiency of additively manufacturing at least one object, i.e. particularly the rate of additively manufacturing at least one object.

The method may comprise the step of dividing the irradiation area of at least one build material layer in at least one first sub-area and at least one further sub-area on basis of at least one division criterion, whereby the at least one first sub-area is irradiated with the first irradiation parameter set, and the at least one further sub-area is irradiated with the further irradiation parameter set, or vice versa. Dividing a respective irradiation area in respective first and further sub-areas may be a prerequisite for assigning respective irradiation parameter sets to respective sub-areas, i.e. a prerequisite for selecting sub-areas which are to be irradiated with the first irradiation parameter set or with the at least one further irradiation parameter set, respectively. Dividing of a respective irradiation area may be performed on basis of a dividing algorithm which implements the division criterion. A respective dividing algorithm may be implemented in a hardware- and/or software-embodied control unit.

The division criterion may refer to a structural property, particularly a mechanical property, of the object in the respective irradiation area or sub-area of the respective irradiation area of the respective build material layer. Hence, an irradiation area may be divided in at least two sub-areas on basis of the desired structural properties of the object in the respective layer.

The or a respective structural property may be or may indicate a mechanical stability of the object in a respective irradiation area or sub-area of the irradiation area of a respective build material layer, for instance. Merely as an example, first sub-areas may correspond to portions of the irradiation area and thus, portions of the object, which require a high(er) mechanical stability, whereas further sub-areas may correspond to portions of the irradiation area and thus, portions of the object, which require a low(er) mechanical stability, or vice versa. Hence, with regard to a specific load situation of the object- a respective load situation may be generated in a computer-based load simulation, for instance - irradiation areas comprising sub-areas comprising potentially critical portions may be detected and divided from sub-areas comprising less critical portions or non-critical portions. Respective sub-areas comprising potentially critical portions may be assigned with an irradiation parameter set which allows for generating suitable structural properties, e.g. a high(er) degree of densification, for the load situation of the object in the respective portion. Respective sub-areas comprising potentially critical portions may thus, be irradiated with an irradiation parameter set which allows for generating suitable structural properties, e.g. a high(er) degree of densification, for the load situation of the object in the respective portion.

The or a division criterion may additionally or alternatively refer to a geometric property of the object in a respective irradiation area or sub-area of the respective irradiation area of a respective build material layer. Hence, an irradiation area may be divided in respective sub-areas on basis of the desired geometric properties of the object in the respective layer.

The or a respective geometric property may be or may indicate an overhanging portion of the object in the irradiation area or sub-area of the respective irradiation area of a respective build material layer, for instance. Merely as an example, first sub-areas may correspond to portions of the irradiation area and thus, portions of the object which form an overhang portion or form part of an overhang portion, whereas further sub-areas may correspond to portions of the irradiation area and thus, portions of the object which do not form an overhang portion or do not form part of an overhang portion, or vice versa. Overhanging portions are to be understood as portions being disposed above non-consolidated portions of loose build material, i.e. non-consolidated portions of a build material layer directly below the respective build material layer. Respective overhanging portions typically, delimit the outer borders or outer contour of the object which is to be additively manufactured. Respective sub-areas comprising overhanging portions may be assigned with an irradiation parameter set which allows for generating overhanging portions. Respective sub-areas comprising overhanging portions may thus, be irradiated with an irradiation parameter set which allows for generating overhanging portions.

The or a geometric property may (also) be or may (also) indicate a dimension of the object, e.g. a length and/or width of the object, in the respective irradiation area or sub-area of the respective irradiation area of a respective build material layer, above or below a pre-definable or pre-defined dimension threshold value, e.g. a pre-definable or pre-defined length-threshold value and/or a pre-definable or pre-defined width-threshold value. Merely as an example, first sub-areas may correspond to portions of the irradiation area and thus, portions of the object which have dimensions, e.g. length and/or width, below a respective threshold value, whereas second sub-areas may correspond to portions of the irradiation area and thus, portions of the object which have dimensions, e.g. length and/or width, equal to or above a respective threshold value, or vice versa. Respective sub-areas comprising dimensions above or below a respective threshold value may be assigned with an irradiation parameter set which allows for generating respective dimensions above or below the respective threshold value. Respective sub-areas comprising dimensions above or below a respective threshold value may thus, be irradiated with an irradiation parameter set which allows for generating respective dimensions above or below the respective threshold value.

The or a geometric property may (also) be or may (also) indicate a freely exposed outer contour portion of the object in the respective irradiation area or sub-area of the respective irradiation area of a respective build material layer, or may (also) be or may (also) indicate a core portion of the object in the respective irradiation area or sub-area of the respective irradiation area of a respective build material layer, for instance. Merely as an example, first sub-areas may correspond to portions of the irradiation area and thus, portions of the object which form a freely exposed outer contour of the object, i.e. a shell or skin of the object, whereas further sub-areas may correspond to portions of the irradiation area and thus, portions of the object which do not form a freely exposed outer contour of the object, but form a core of the object, or vice versa. Respective sub-areas comprising freely exposed outer contour sections of the object may be assigned with an irradiation parameter set which allows for generating freely exposed outer contours of the object and may thus, be irradiated with an irradiation parameter set which allows for generating freely exposed outer contours of the object. Respective sub-areas comprising core portions of the object may be assigned with an irradiation parameter set which allows for generating core portions of the object and may thus, be irradiated with an irradiation parameter set which allows for generating core portions of the object.

The method described herein may thus, be readily implemented as or in a so-called core-shell-irradiation approach or strategy, respectively in that freely exposed outer contour sections (shell sections) of the object may be assigned with and irradiated with a specific irradiation parameter set, e.g. the first irradiation parameter set, and core portions of the object may be assigned with and irradiated with a different specific irradiation parameter set, e.g. the at least one further irradiation parameter set.

The invention further relates to a hard- and/or software embodied control unit for an apparatus for additively manufacturing at least one three-dimensional object by means of successive layerwise selective irradiation and consolidation of build material layers, whereby each build material layer comprises at least one irradiation area which is to be irradiated and consolidated by means of at least one energy beam. The control unit is configured to control the successive layerwise selective irradiation and consolidation of respective irradiation areas in accordance with the method described herein.

Thus, the control unit is particularly, configured to control the successive layerwise selective irradiation and consolidation of respective irradiation areas on basis of at least one irradiation parameter set resulting in a specific amount of energy input into the irradiation area of a respective build material layer, whereby the at least one irradiation parameter set comprises at least one irradiation parameter, whereby a first irradiation parameter set and at least one further irradiation parameter set is used, whereby the first irradiation parameter set allows for a first amount of energy input into an irradiation area of a first build material layer which results in a bond and connection, respectively of the irradiation area of the first build material layer with selectively irradiated and consolidated areas of a second build material layer directly disposed below the first build material layer, and the at least one further irradiation parameter set allows for a further amount of energy input into an irradiation area of a first build material layer which results in a bond and connection, respectively of the irradiation area of the first build material layer with the selectively irradiated and consolidated areas of a second build material layer directly disposed below the first build material layer and at least one further build material layer directly disposed below the second build material layer.

The invention further relates to an apparatus for additively manufacturing at least one three-dimensional object by means of successive layerwise selective irradiation and consolidation of build material layers, whereby each build material layer comprises at least one irradiation area which is to be irradiated and consolidated by means of at least one energy beam. The apparatus comprises or is connected with a control unit as described herein.

The apparatus can be a selective laser sintering apparatus, a selective laser melting apparatus, or a selective electron beam melting apparatus, for instance. Yet, it is also conceivable that the apparatus is a binder jetting apparatus, particularly a metal binder jetting apparatus, for instance.

The apparatus comprises a number of functional and/or structural units which are operable or operated during its operation. Each functional and/or structural unit may comprise a number of functional and/or structural sub-units. Exemplary functional and/or structural units are a build material application unit which is configured to apply an amount of build material which is to be selectively irradiated and consolidated in the build plane of the apparatus so as to form a build material layer in the build plane, an irradiation unit which is configured to selectively irradiate and thereby, consolidate build material layers with at least one energy beam, a carrying unit for carrying the build material layers and the three-dimensional object which is to be additively manufactured, and a respective control unit.

All annotations regarding the method also apply to the control unit and/or the apparatus.

Exemplary embodiments of the invention are described with reference to the Fig., whereby:
- Fig. 1: shows a principle drawing of an apparatus for additively manufacturing of three-dimensional objects according to an exemplary embodiment;
- Fig. 2, 3: each show a principle drawing of an exemplary object manufacturable with a method according to an exemplary embodiment;
- Fig. 4 - 6: each show a principle drawing of a build material layer which is to be selectively irradiated and consolidated in accordance with a method according to an exemplary embodiment; and
- Fig. 7 - 9: each show a principle drawing of a build material layer which is to be selectively irradiated and consolidated in accordance with a method according to another exemplary embodiment.

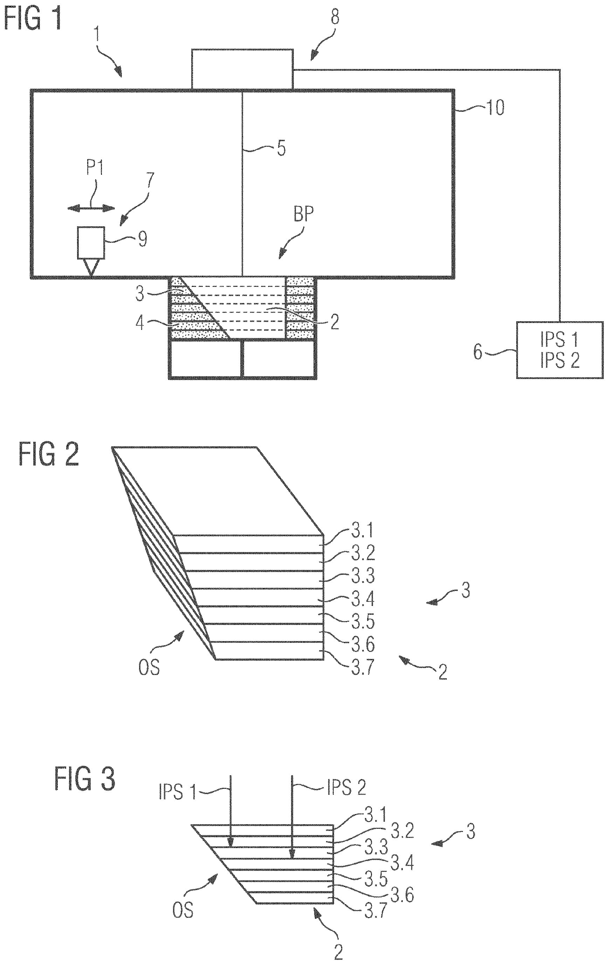

Fig. 1 shows a principle drawing of an exemplary embodiment of an apparatus 1 for additively manufacturing three-dimensional objects 2, e.g. technical components, by means of successive layerwise selective irradiation and accompanying consolidation of build material layers 3 of a powdered build material 4, e.g. a metal powder, which can be consolidated by means of at least one energy beam 5 according to an exemplary embodiment. The energy beam 5 may be an electron beam or a laser beam, for instance.

The apparatus 1 may thus, be embodied as a selective electron beam melting apparatus or as a selective laser melting apparatus, for instance.

The apparatus 1 comprises a number of functional and/or structural units which are operable and operated during its operation. Each functional and/or structural unit may comprise a number of functional and/or structural sub-units. Operation of the functional and/or structural units and the apparatus 1, respectively is controlled by a hard- and/or software embodied (central) control unit 6.

Exemplary functional and/or structural units of the apparatus 1 are a build material application unit 7, an irradiation unit 8, and the control unit 6.

The build material application unit 7 is configured to apply an amount of build material 4 in the build plane BP of the apparatus 1 so as to generate respective build material layers 3 which are to be selectively irradiated and consolidated during additively manufacturing a three-dimensional object 2. The build material application unit 7 may comprise a build material application element 9 which may be embodied as a blade-like re-coating element, for instance. The build material application element 9 is moveably supported within the process chamber 10 of the apparatus 1; the build material application element 9 may be moved across the build plane BP so as to apply an amount of dosed build material 4 in the build plane BP and so as to generate a respective build material layer 3 which is to be selectively irradiated and consolidated during additively manufacturing a three-dimensional object 2. An exemplary motion of the build material application element 9 across the build plane BP is indicated by double-arrow P1. A drive unit (not shown) may be assigned to the build material application unit 7 so as to generate a drive force for moving the build material application element 9 across the build plane BP.

The irradiation unit 8 is configured to selectively irradiate and thereby, consolidate respective build material layers 3 which have been applied in the build plane BP of the apparatus 1 by means of the build material application unit 7 with at least one energy beam 5. The irradiation unit 8 may comprise a beam generating unit (not shown) configured to generate the at least one energy beam 5 and a beam deflecting unit (not shown), e.g. a scanning unit, configured to deflect the at least one energy beam 5 to diverse positions within the build plane BP.

The control unit 6 is configured to implement a method for additively manufacturing a three-dimensional object 2 - examples of a respective objects 2 are given in Fig. 2, 3 each showing a principle drawing of an exemplary object 2 manufacturable with the method, whereby Fig. 2 shows a perspective view of the object 2 and Fig. 3 shows a frontal view of the object 2 (the loose build material 4 surrounding the object 2 is not depicted).

According to the method, each build material layer 3 comprises at least one irradiation area IA which is to be irradiated and consolidated by means of at least one energy beam 5. A respective irradiation area IA corresponds to a cross-section of the object 2, i.e. to the cross-section of the object 2 in the respective build material layer 3.

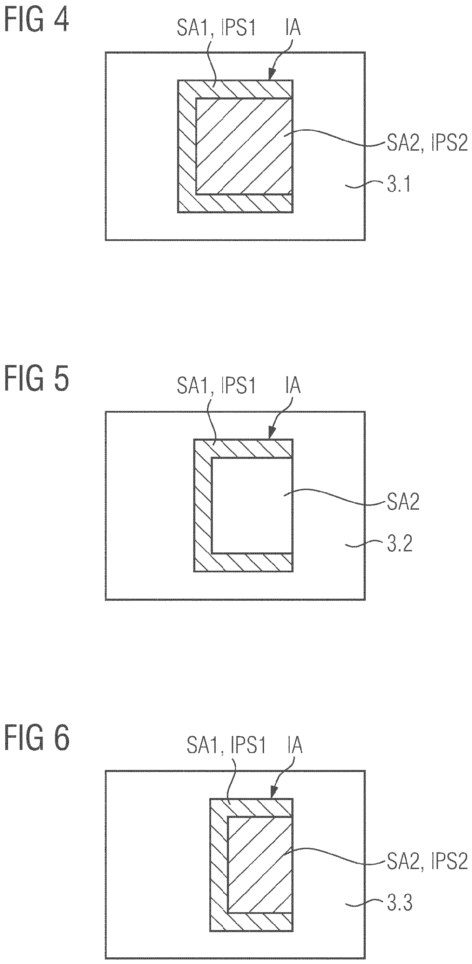

Fig. 4 - 6 each show a principle drawing of a build material layer 3 comprising an irradiation area IA which is to be selectively irradiated and consolidated during additively manufacturing the object 2 in accordance with a method according to an exemplary embodiment. Fig. 4 - 6 show the respective build material layer 3 in a top-view.

Fig. 2, 3 and Fig. 4 - 6 are correlated by the numbers of the build material layers 3, whereby the first build material layer 3, i.e. the top build material layer 3, is numbered as 3.1, the second build material layer being directly disposed below the first build material layer 3.1 is numbered as 3.2, the third build material layer being directly disposed below the second build material layer 3.2 is numbered as 3.3 and so forth.

The successive layerwise selective irradiation and consolidation of respective irradiation areas IA is performed on basis of at least one irradiation parameter set IPS. The irradiation parameter set IPS comprises at least one irradiation parameter. The irradiation parameter may be a or comprise at least one energy beam parameter of the energy beam 5 used for irradiating respective irradiation areas IA. A respective energy beam parameter may be or comprise at least one of: the intensity or power of the energy beam 5, the intensity profile of the energy beam 5, the (cross-sectional) shape of the energy beam 5, the focal size or spot size of the energy beam 5, the focal position or spot position of the energy beam 5, the energy beam path according to which the energy beam 5 is moved across an irradiation area IA, the speed with which the energy beam 5 is moved along a respective energy beam path across an irradiation area IA, the geometrical relationship between respective energy beam paths, particularly the relative orientation of respective energy beam paths, the distance between respective energy beam paths, the degree of overlap of respective energy beam paths, etc.

Each irradiation parameter set IPS results in a specific amount of energy input into the irradiation area IA of a respective build material layer 3 which is to be selectively irradiated and consolidated. Thus, the combination of respective irradiation parameters or energy beam parameters, respectively of a specific irradiation parameter set IPS is correlated with specific amount of energy input into the irradiation area IA of a respective build material layer 3. The amount of energy input into the irradiation area IA of a respective build material layer 3 results in a bond and consolidation, respectively of the irradiation area IA of the respective build material layer 3 and also in a bond and connection, respectively of the irradiation area IA of the respective build material layer 3 with the irradiation area IA of at least one previously selectively irradiated and consolidated build material layer 3.

According to the exemplary embodiment of the method, a first irradiation parameter set IPS 1 and a second irradiation parameter set IPS2 (the second irradiation parameter set IPS2 being representative for a plurality of further irradiation parameter sets) is used for additively manufacturing the object 2. The irradiation parameter sets IPS1, IPS2 differ in their respective amount of energy input into an irradiation area IA of a respective build material layer 3 which is to be selectively irradiated and consolidated. Since the amount of energy input into an irradiation area IA of a respective build material layer 3 which is to be selectively irradiated and consolidated is correlated with respective irradiation parameters or energy beam parameters, respectively defined in the respective irradiation parameter set, the irradiation parameter sets IPS1, IPS2 typical differ in at least one irradiation parameter or energy beam parameter, respectively.

The first irradiation parameter set IPS1 allows for a first amount of energy input into the irradiation area IA of the first build material layer 3.1 which results in a connection of the irradiation area IA of the first build material layer 3.1 with selectively irradiated and consolidated areas of a second build material layer 3.2 directly disposed below the first build material layer 3.1. The energy input provided by the first irradiation parameter set IPS1 is indicated by the left arrow in Fig. 3.

The second irradiation parameter set IPS2 allows for a higher amount of energy input into the irradiation area IA of the first build material layer 3.1 which results in a connection of the irradiation area IA of the first build material layer 3.1 with the selectively irradiated and consolidated areas of the second build material layer 3.2 and at least the third build material layer 3.3. The energy input provided by the second irradiation parameter set IPS2 is indicated by the right arrow in Fig. 3.

Hence, the irradiation parameter sets IPS1, IPS2 particularly differ in their respective depths of penetration of the energy input into the irradiation area IA of a respective first build material layer 3.1, whereby the first irradiation parameter set IPS1 has a smaller depth of penetration of the energy compared with the second irradiation parameter set IPS2 (as indicated by the length of the arrows in Fig. 3). This results in that when the first irradiation parameter set IPS1 is used, only two build material layers 3 being disposed directly on top of each other are bonded and connected, respectively, whereas when the second irradiation parameter set IPS2 is used at least three build material layers 3 being disposed directly on top of each other are bonded and connected, respectively (as indicated by the length of the arrows in Fig. 3).

As a consequence, specific sub-areas SA1, SA2 of irradiation areas IA may not be irradiated in every build material layer 3, but only in every n-th layer (n being an integer) since the desired vertical bond or connection of vertically adjacently disposed build material layers 3 may be accomplished by using the second irradiation parameter set IPS2 when irradiating a further build material layer 3, e.g. particularly the next build material layer 3 (see Fig. 4 - 6 and Fig. 7 - 9). In other words, some irradiation areas IA may only be partially irradiated, whereby the partial irradiation is performed on basis of the first irradiation parameter set IPS1, since the desired vertical bond or connection of vertically adjacently disposed build material layers 3 may be accomplished by using the second irradiation parameter set IPS2 when irradiating a further build material layer 3 since the second irradiation parameter set IPS2 allows for bonding and connecting, at least three vertically adjacently disposed build material layers 3.

The second irradiation parameter set IPS2 thus, comprises irradiation parameters resulting in a higher energy input, particularly a higher depth of penetration of the energy input, into the irradiation area IA of a respective build material layer 3 compared with the first irradiation parameter set IPS1. The second irradiation parameter set IPS2 thus, comprises a combination of irradiation parameters and energy beam parameters, respectively which result in a higher energy input, particularly a higher depth of penetration of the energy input, into the irradiation area IA of a respective build material layer 3 compared with the combination of irradiation parameters and energy beam parameters, respectively of the first irradiation parameter set IPS1. The second irradiation parameter set IPS2 may use an energy beam 5 having a higher energy beam intensity or energy beam power compared with the energy beam 5 of the first irradiation parameter set IPS1, for instance.

As is apparent from Fig. 4 - 6 showing the irradiation areas IA of the three build material layers 3.1 - 3.3 the first irradiation parameter set IPS1 (indicated with a first hatching) may be applied/used in every build material layer 3, whereas the second irradiation parameter set IPS2 (indicated with a second hatching) may not be applied/used in every build material layer 3. As is apparent from Fig. 4 - 6, the second irradiation parameter set IPS2 may only be applied in every other build material layer 3.

Since it is not necessarily required to irradiate every irradiation area IA with the same irradiation parameter set IPS and it is particularly, possible to select specific sub-areas SA1, SA2 of irradiation areas IA which are not to be irradiated in every build material layer 3, but only in every n-th layer because the desired vertical bonding or connecting of vertically adjacently disposed build material layers 3 may be accomplished by using the second irradiation parameter set IPS2 when irradiating a further build material layer 3, e.g. particularly the next build material layer 3, the method implements an irradiation approach or irradiation strategy, respectively which may significantly increase the efficiency of additively manufacturing the object 2, i.e. particularly the rate of additively manufacturing the object 2.

As indicated by respective sub-areas SA1, SA2 of an irradiation areas IA, the method may comprise the step of dividing the irradiation areas IA of the build material layers 3 at least in the aforementioned first sub-area SA1 and the aforementioned second sub-area SA2 on basis of at least one division criterion, whereby the first sub-area SA1 is irradiated with the first irradiation parameter set IPS, and the second sub-area SA2 is irradiated with the second irradiation parameter set IPS2 (see Fig. 4 - 6 and Fig. 7 - 9). Dividing a respective irradiation area IA in respective first and second sub-areas SA1, SA2 may be a prerequisite for assigning respective irradiation parameter sets IPS1, IPS2 to respective sub-areas SA1, SA2, i.e. a prerequisite for selecting sub-areas SA1, SA2 which are to be irradiated with the first irradiation parameter set IPS1 or with the second irradiation parameter set IPS2, respectively. Dividing of a respective irradiation area IA is performed on basis of a dividing algorithm which implements the division criterion. A respective dividing algorithm may be implemented in the hardware- and/or software-embodied control unit 6.

The division criterion may refer to a structural property, i.e. particularly a mechanical property, of the object 2 in the respective irradiation area IA or sub-area SA1, SA2 of the respective irradiation area IA of the respective build material layer 3. Hence, an irradiation area IA may be divided in at least two sub-areas SA1, SA2 on basis of the desired structural properties of the object 2 in the respective layer.

The structural property may be or may indicate a mechanical stability of the object 2 in a respective irradiation area IA or sub-area SA1, SA2 of the irradiation area IA of a respective build material layer 3. In the exemplary embodiments of Fig. 4 - 6, first sub-areas SA1 may correspond to portions of the irradiation area IA and thus, portions of the object 2, which require a high(er) mechanical stability, whereas second sub-areas SA2 may correspond to portions of the irradiation area IA and thus, portions of the object 2, which require a low(er) mechanical stability, or vice versa. Hence, with regard to a specific load situation of the object 2 irradiation areas IA comprising sub-areas SA1, SA2 comprising potentially critical portions may be detected and divided from sub-areas SA1, SA2 comprising less critical portions or non-critical portions. Respective sub-areas SA1, SA2 comprising potentially critical portions are assigned with an irradiation parameter set IPS which allows for generating suitable structural properties, e.g. a high(er) degree of densification. Respective sub-areas SA1, SA2 comprising potentially critical portions are thus, irradiated with an irradiation parameter set IPS, e.g. the first irradiation parameter set IPS1, which allows for generating suitable structural properties, e.g. a high(er) degree of densification.

The or a division criterion may additionally or alternatively refer to a geometric property of the object 2 in a respective irradiation area IA or sub-area SA1, SA2 of the respective irradiation area IA of a respective build material layer 3. Hence, an irradiation area IA may be divided in respective sub-areas SA1, SA2 on basis of the desired geometric properties of the object 2 in the respective layer.

As is apparent from Fig. 4 - 6, the geometric property may be or may indicate an overhanging portion OS of the object 2 in the sub-area SA1, SA2 of the respective irradiation area IA of a respective build material layer 3. In the exemplary embodiments of Fig. 4 - 6, first sub-areas SA1 may correspond to portions of the irradiation area IA and thus, portions of the object 2 which form part of an overhang portion OS, whereas the second sub-areas SA2 correspond to portions of the irradiation area IA and thus, portions of the object 2 which do not form part of an overhang portion OS. The first sub-areas SA1 comprising the overhanging portions OS are assigned with an irradiation parameter set IPS1 which allows for generating overhanging portions OS. The first sub-areas SA1 comprising the overhanging portions OS are thus, irradiated with the first irradiation parameter set IPS1 which allows for generating overhanging portions OS.

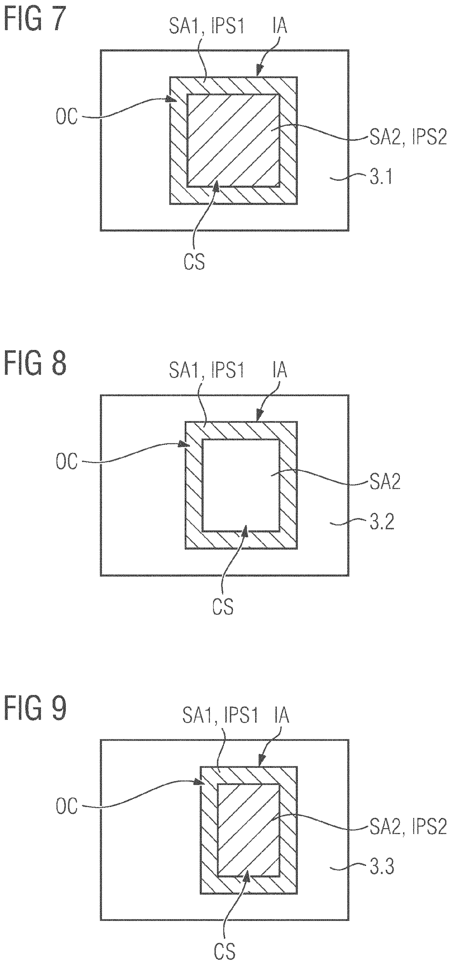

Fig. 7 - 9 each show a principle drawing of a build material layer 3 comprising an irradiation area IA which is to be selectively irradiated and consolidated in accordance with a method according to another exemplary embodiment. Fig. 7 - 9 show the respective build material layer 3 in a top-view.

As is apparent from Fig. 7 - 9, a respective geometric property may also be or may also indicate a dimension of the object 2, e.g. a length and/or width of the object 2, in the respective sub-area SA1, SA2 of the respective irradiation area IA of a respective build material layer 3, above or below a pre-definable or pre-defined dimension threshold value, e.g. a pre-definable or pre-defined length-threshold value and/or a pre-definable or pre-defined width-threshold value. In the exemplary embodiments of Fig. 7 - 9, the first sub-area SA1 corresponds to portions of the irradiation area IA and thus, portions of the object 2 which have dimensions, e.g. length and/or width, below a respective threshold value, whereas the second sub-area SA2 corresponds to portions of the irradiation area IA and thus, portions of the object 2 which have dimensions, e.g. length and/or width, equal to or above a respective threshold value. The first sub-area SA1 comprising dimensions below a respective threshold value may be assigned with the first irradiation parameter set IPS1 which allows for generating respective dimensions below the respective threshold value in this embodiment. The second sub-area SA2 comprising dimensions above or below the respective threshold value are irradiated with the second irradiation parameter set IPS2 which allows for generating respective dimensions above the respective threshold value in this embodiment. As is also apparent from Fig. 7 - 9, a respective geometric property may also be or may also indicate a freely exposed outer contour section OC of the object 2 in the respective irradiation area IA of the respective build material layer 3 or may also be or may also indicate a core portion CS of the object 2 in the respective irradiation area IA of the respective build material layer 3. In the exemplary embodiments of Fig. 7 - 9, first sub-areas SA1 correspond to portions of the irradiation area IA and thus, portions of the object 2 which form a freely exposed outer contour OC of the object 2, i.e. a shell or skin of the object 2, whereas the second sub-areas SA2 correspond to portions of the irradiation area IA and thus, portions of the object 2 which do not form a freely exposed outer contour OC of the object 2 but form a core portion CS of the object 2. The first sub-areas SA1 comprising the freely exposed outer contour sections OC of the object 2 are assigned with the first irradiation parameter set IPS1 which allows for generating freely exposed outer contours OC of the object 2 and are thus, irradiated with the first irradiation parameter set IPS1 which allows for generating freely exposed outer contour sections OC of the object 2. The second sub-areas SA2 comprising the core portions CS of the object 2 are assigned with the second irradiation parameter set IPS2 which allows for generating core portions of the object 2 and may thus, be irradiated with an irradiation parameter set which allows for generating core portions of the object 2. The embodiments of Fig. 7 - 9 thus, show, that the method may be readily implemented as or in a so-called core-shell-irradiation approach or strategy, respectively in that freely exposed outer contour sections OC of the object 2 may be assigned with and irradiated with a specific irradiation parameter set, e.g. the first irradiation parameter set IPS1, and core portions of the object 2 may be assigned with and irradiated with a different specific irradiation parameter set, e.g. the second irradiation parameter set IPS2.

Single, a plurality, or all features mentioned in context with a specific embodiment may also apply to other embodiments. Hence, mentioned in context with a specific embodiment may be combined with at least one feature of another specific embodiment within the scope of the appended claims.

## Claims

1. Method for additively manufacturing at least one three-dimensional object (2) by means of successive layerwise selective irradiation and consolidation of build material layers (3), whereby each build material layer (3) comprises at least one irradiation area (IA) which is to be irradiated and consolidated by means of at least one energy beam (5), **wherein**
the successive layerwise selective irradiation and consolidation of respective irradiation areas (IA) is performed on basis of at least one irradiation parameter set (IPS) resulting in a specific amount of energy input into the irradiation area (IA) of a respective build material layer (3), whereby the at least one irradiation parameter set (IPS) comprises at least one irradiation parameter, whereby
a first irradiation parameter set (IPS1) and at least one further irradiation parameter set (IPS2) is used, whereby
the first irradiation parameter set (IPS1) allows for a first amount of energy input into an irradiation area (IA) of a first build material layer (3) which results in a connection of the irradiation area (IA) of the first build material layer (3) with selectively irradiated and consolidated areas of a second build material layer (3) directly disposed below the first build material layer (3), and
the at least one further irradiation parameter set (IPS2) allows for a further amount of energy input into an irradiation area (IA) of a first build material layer (3) which results in a connection of the irradiation area (IA) of the first build material layer (3) with the selectively irradiated and consolidated areas of a second build material layer (3) directly disposed below the first build material layer (3) and at least one further build material layer (3) directly disposed below the second build material layer (3), whereby the first irradiation parameter set (IPS1) is applied in every build material layer (3) and wherein the further irradiation parameter set (IPS2) is not applied in every build material layer (3).

2. Method according to Claim 1, **comprising** dividing at least one irradiation area (IA) of at least one build material layer (3) in at least one first sub-area (SA1) and at least one further sub-area (SA2) on basis of at least one division criterion, whereby the at least one first sub-area (SA1) is irradiated with the first irradiation parameter set (IPS1), and
the at least one further sub-area (SA2) is irradiated with the further irradiation parameter (IPS2) set, or vice versa.

3. Method according to Claim 2, **wherein** the division criterion refers to a structural property of the three-dimensional object (2) which is to be additively manufactured in the respective sub-area (SA) of the respective build material layer (3).

4. Method according to Claim 3, **wherein** the structural property is or indicates a mechanical stability of the three-dimensional object (2) in the respective sub-area (SA) of the respective build material layer (3).

5. Method according to any of Claims 2 - 4, **wherein** the division criterion refers to a geometric property of the three-dimensional object (2) which is to be additively manufactured in the respective sub-area (SA) of the respective build material layer (3).

6. Method according to Claim 5, **wherein** the geometric property is or indicates an overhanging portion (OS) of the three-dimensional object (2) in the respective sub-area (SA) of the respective build material layer (3).

7. Method according to Claim 5 or 6, **wherein** the geometric property is or indicates a dimension of the three-dimensional object (2), particularly a length and/or width of the three-dimensional object (2), in the respective sub-area (SA) of the respective build material layer (3) above or below a pre-definable or pre-defined threshold value.

8. Method according to any of Claims 5 - 7, **wherein** the geometric property is or indicates a freely exposed outer contour section (OC) of the three-dimensional object (2) in the respective sub-area (SA) of the respective build material layer (3) or indicates a core-portion (CS) of the three-dimensional object (2) in the respective sub-area (SA) of the respective build material layer (3).

9. Method according to any of the preceding Claims, **wherein** the further irradiation parameter set (IPS2) comprises at least one irradiation parameter resulting in a higher energy input, particularly a depth of penetration of the energy input, into the irradiation area (IA) of a respective build material layer (3) compared with the first irradiation parameter set (IPS1), or vice versa.

10. Method according to Claim 9, **wherein** the at least one further irradiation parameter set (IPS2) is only applied in every other build material layer (3).

11. Control unit (6) for an apparatus (1) for additively manufacturing at least one three-dimensional object (2) by means of successive layerwise selective irradiation and consolidation of build material layers (3), whereby each build material layer (3) comprises at least one irradiation area (IA) which is to be irradiated and consolidated by means of at least one energy beam (5), whereby
the control unit (6) is configured to control the successive layerwise selective irradiation and consolidation of respective irradiation areas (IA) in accordance with the method according to any of the preceding Claims.

12. Apparatus (1) for additively manufacturing at least one three-dimensional object (2) by means of successive layerwise selective irradiation and consolidation of build material layers (3), whereby each build material layer (3) comprises at least one irradiation area (IA) which is to be irradiated and consolidated by means of at least one energy beam (5), the apparatus (1) comprising a control unit (6) according to Claim 11.

## Patentansprüche

1. Verfahren zur additiven Herstellung mindestens eines dreidimensionalen Objekts (2) mittels
sukzessiver schichtweiser selektiver Bestrahlung und Verfestigung von Aufbaumaterialschichten (3), wobei jede Aufbaumaterialschicht (3) mindestens einen mittels mindestens eines Energiestrahls (5) zu bestrahlenden und zu verfestigenden Bestrahlungsbereich (IA) umfasst, **worin**
die sukzessive schichtweise selektive Bestrahlung und Verfestigung jeweiliger Bestrahlungsbereiche (IA) auf der Basis mindestens eines Bestrahlungsparametersatzes (IPS) durchgeführt wird, der zu einer bestimmten Menge an Energieeintrag in den Bestrahlungsbereich (IA) einer jeweiligen Aufbaumaterialschicht (3) führt, wobei der mindestens eine Bestrahlungsparametersatz (IPS) mindestens einen Bestrahlungsparameter umfasst, wobei
ein erster Bestrahlungsparametersatz (IPS1) und mindestens ein weiterer Bestrahlungsparametersatz (IPS2) verwendet wird, wobei
der erste Bestrahlungsparametersatz (IPS1) einen ersten Energieeintrag in einen Bestrahlungsbereich (IA) einer ersten Aufbaumaterialschicht (3) ermöglicht, der zu einer Verbindung des Bestrahlungsbereichs (IA) der ersten Aufbaumaterialschicht (3) mit selektiv bestrahlten und verfestigten Bereichen einer direkt unter der ersten Aufbaumaterialschicht (3) angeordneten zweiten Aufbaumaterialschicht (3) führt, und
wobei der mindestens eine weitere Bestrahlungsparametersatz (IPS2) einen weiteren Energieeintrag in einen Bestrahlungsbereich (IA) einer ersten Aufbaumaterialschicht (3) ermöglicht, der eine Verbindung des Bestrahlungsbereichs (IA) der ersten Aufbaumaterialschicht (3) mit den selektiv bestrahlten und verfestigten Bereichen einer zweiten Aufbaumaterialschicht (3), die direkt unterhalb der ersten Aufbaumaterialschicht (3) angeordnet ist, und mindestens einer weiteren Aufbaumaterialschicht (3), die direkt unterhalb der zweiten Aufbaumaterialschicht (3) angeordnet ist, bewirkt, wobei der erste Bestrahlungsparametersatz (IPS1) in jeder Aufbaumaterialschicht (3) angewendet wird und worin der weitere Bestrahlungsparametersatz (IPS2) nicht in jeder Aufbaumaterialschicht (3) angewendet wird.

2. Verfahren nach Anspruch 1, **umfassend** die Unterteilung mindestens eines
Bestrahlungsbereichs (IA) mindestens einer Aufbaumaterialschicht (3) in mindestens einen ersten Teilbereich (SA1) und mindestens einen weiteren Teilbereich (SA2) gemäß mindestens einem Unterteilungskriterium, wobei
der mindestens eine erste Teilbereich (SA1) mit dem ersten eingestellten Bestrahlungsparameter (IPS1) bestrahlt wird
und
der mindestens eine weitere Teilbereich (SA2) mit dem eingestellten weiteren Bestrahlungsparameter (IPS2) bestrahlt wird, oder umgekehrt.

3. Verfahren nach Anspruch 2, **worin** sich das Unterteilungskriterium auf eine Struktureigenschaft des dreidimensionalen Objekts (2) bezieht, das in dem jeweiligen Teilbereich (SA) der jeweiligen Aufbaumaterialschicht (3) additiv hergestellt werden soll.

4. Verfahren nach Anspruch 3, **worin** die Struktureigenschaft eine mechanische Stabilität des dreidimensionalen Objekts (2) in dem jeweiligen Teilbereich (SA) der jeweiligen Aufbaumaterialschicht (3) ist oder diese indiziert.

5. Verfahren nach einem der Ansprüche 2 - 4, **worin** sich das Unterteilungskriterium auf eine geometrische Eigenschaft des dreidimensionalen Objekts (2) bezieht, das in dem jeweiligen Teilbereich (SA) der jeweiligen Aufbaumaterialschicht (3) additiv hergestellt werden soll.

6. Verfahren nach Anspruch 5, **worin** die geometrische Eigenschaft ein überhängender Abschnitt (OS) des dreidimensionalen Objekts (2) in dem jeweiligen Teilbereich (SA) der jeweiligen Aufbaumaterialschicht (3) ist oder diese indiziert.

7. Verfahren nach Anspruch 5 oder 6, **worin** die geometrische Eigenschaft eine Abmessung des dreidimensionalen Objekts (2), insbesondere eine Länge und/oder Breite des dreidimensionalen Objekts (2), in dem jeweiligen Teilbereich (SA) der jeweiligen Aufbaumaterialschicht (3) oberhalb oder unterhalb eines vordefinierbaren oder vordefinierten Schwellenwerts ist oder diese indiziert.

8. Verfahren nach einem der Ansprüche 5 - 7, **worin** die geometrische Eigenschaft ein frei liegender Außenkonturabschnitt (OC) des dreidimensionalen Objekts (2) in dem jeweiligen Teilbereich (SA) der jeweiligen Aufbaumaterialschicht (3) ist oder diesen indiziert oder einen Kernanteil (CS) des dreidimensionalen Objekts (2) in dem jeweiligen Teilbereich (SA) der jeweiligen Aufbaumaterialschicht (3) indiziert.

9. Verfahren nach einem der vorangegangenen Ansprüche, **worin** der weitere Bestrahlungsparametersatz (IPS2) mindestens einen Bestrahlungsparameter umfasst, der zu einem höheren Energieeintrag, insbesondere einer Eindringtiefe des Energieeintrags, in den Bestrahlungsbereich (IA) einer jeweiligen Aufbaumaterialschicht (3) im Vergleich zum ersten Bestrahlungsparametersatz (IPS1) führt, oder umgekehrt.

10. Verfahren nach Anspruch 9, **worin** der mindestens eine weitere Bestrahlungsparametersatz (IPS2) nur in jeder zweiten Aufbaumaterialschicht (3) angewendet wird.

11. Steuereinheit (6) für eine Vorrichtung (1) zur additiven Herstellung mindestens eines dreidimensionalen Objekts (2) mittels sukzessiver schichtweiser selektiver Bestrahlung und Verfestigung von Aufbaumaterialschichten (3), wobei jede Aufbaumaterialschicht (3) mindestens einen mittels mindestens eines Energiestrahls (5) zu bestrahlenden und zu verfestigenden Bestrahlungsbereich (IA) umfasst, wobei
die Steuereinheit (6) so konfiguriert ist, dass sie die aufeinanderfolgende schichtweise selektive Bestrahlung und Verfestigung der jeweiligen Bestrahlungsbereiche (IA) gemäß dem Verfahren nach einem der vorangegangenen Ansprüche steuert.

12. Vorrichtung (1) zur additiven Herstellung mindestens eines dreidimensionalen Objekts (2) mittels sukzessiver schichtweiser selektiver Bestrahlung und Verfestigung von Aufbaumaterialschichten (3), wobei jede Aufbaumaterialschicht (3) mindestens einen mittels mindestens eines Energiestrahls (5) zu bestrahlenden und zu verfestigenden Bestrahlungsbereich (IA) umfasst, wobei die Vorrichtung (1) eine Steuereinheit (6) nach Anspruch 11 umfasst.

## Revendications

1. Procédé de fabrication additive d'au moins un objet tridimensionnel (2) par irradiation successive sélective couche par couche et consolidation de couches de matériau de construction (3), chaque couche de matériau de construction (3) comprenant au moins une zone d'irradiation (IA) devant être irradiée et consolidée au moyen d'au moins un faisceau d'énergie (5), dans lequel
l'irradiation successive sélective couche par couche et la consolidation de zones d'irradiation respectives (IA) sont effectuées sur la base d'au moins un jeu de paramètres d'irradiation (IPS) entraînant l'apport d'une quantité spécifique d'énergie dans la zone d'irradiation (IA) d'une couche respective de matériau de construction (3), où l'au moins un jeu de paramètres d'irradiation (IPS) comprend au moins un paramètre d'irradiation, où un premier jeu de paramètres d'irradiation (IPS1) et au moins un autre jeu de paramètres d'irradiation (IPS2) sont utilisés,
le premier jeu de paramètres d'irradiation (IPS1) permettant l'apport d'une première quantité d'énergie dans une zone d'irradiation (IA) d'une première couche de matériau de construction (3), ce qui entraîne une connexion de la zone d'irradiation (IA) de la première couche de matériau de construction (3) avec des zones sélectivement irradiées et consolidées d'une seconde couche de matériau de construction (3) disposée directement sous la première couche de matériau de construction (3), et
l'au moins un autre le jeu de paramètres d'irradiation (IPS2) permettant l'apport d'une autre quantité d'énergie dans une zone d'irradiation (IA) d'une première couche de matériau de construction (3), ce qui entraîne une connexion de la zone d'irradiation (IA) de la première couche de matériau de construction (3) avec les zones sélectivement irradiées et consolidées d'une seconde couche de matériau de construction (3) disposée directement sous la première couche de matériau de construction (3) et au moins une autre couche de matériau de construction (3) disposée directement sous la seconde couche de matériau de construction (3), le premier jeu de paramètres d'irradiation (IPS1) étant appliqué dans toutes les couches de matériau de construction (3), et l'autre jeu de paramètres d'irradiation (IPS2) n'étant pas appliqué dans toutes les couches de matériau de construction (3).

2. Procédé selon la revendication 1, comprenant de diviser au moins un zone d'irradiation (IA) d'au moins une couche de matériau de construction (3) en au moins une première sous-zone (SA1) et au moins une autre sous-zone (SA2) sur la base d'au moins un critère de division, où
l'au moins une première sous-zone (SA1) est irradiée avec le premier jeu de paramètres d'irradiation
(IPS1), et
l'au moins une autre sous-zone (SA2) est irradiée avec l'autre jeu de paramètres d'irradiation (IPS2), ou vice versa.

3. Procédé selon la revendication 2, dans lequel le critère de division se réfère à une propriété structurelle de l'objet tridimensionnel (2) destiné à être fabriqué additivement dans la sous-zone respective (SA) de la couche de matériau de construction respective (3).

4. Procédé selon la revendication 3, dans lequel la propriété structurelle est ou indique une stabilité mécanique de l'objet tridimensionnel (2) dans la sous-zone respective (SA) de la couche de matériau de construction respective (3).

5. Procédé selon l'une quelconque des revendications 2 à 4, dans lequel le critère de division se réfère à une propriété géométrique de l'objet tridimensionnel (2) destiné à être fabriqué additivement dans la sous-zone respective (SA) de la couche de matériau de construction respective (3).

6. Procédé selon la revendication 5, dans lequel la propriété géométrique est ou indique une portion en surplomb (OS) de l'objet tridimensionnel (2) dans la sous-zone respective (SA) de la couche de matériau de construction respective (3).

7. Procédé selon la revendication 5 ou 6, dans lequel la propriété géométrique est ou indique une dimension de l'objet tridimensionnel (2), en particulier une longueur et/ou une largeur de l'objet tridimensionnel (2), dans la sous-zone respective (SA) de la couche de matériau de construction respective (3) au-dessus ou en dessous d'une valeur seuil prédéfinissable ou prédéfinie.

8. Procédé selon l'une quelconque des revendication 5 à 7, dans lequel la propriété géométrique est ou indique une section de contour externe exposée de l'objet tridimensionnel (2) dans la sous-zone respective (SA) de la couche de matériau de construction respective (3) ou indique une portion de cœur (CS) de l'objet tridimensionnel (2) dans la sous-zone respective (SA) de la couche de matériau de construction respective (3).

9. Procédé selon l'une quelconque des revendications précédentes, dans lequel l'autre jeu de paramètres d'irradiation (IPS2) comprend au moins un paramètre d'irradiation entraînant un apport plus important d'énergie, en particulier une profondeur de pénétration de l'apport d'énergie dans la zone d'irradiation (IA) d'une couche de matériau de construction respective (3) par rapport au premier jeu de paramètres d'irradiation (IPS1), ou vice versa.

10. Procédé selon la revendication 9, dans lequel l'au moins un autre jeu de paramètres d'irradiation (IPS2) n'est appliqué que dans l'une couche de matériau de construction sur deux (3).

11. Unité de commande (6) pour un appareil (1) conçu pour fabriquer additivement au moins un objet tridimensionnel (2) au moyen d'une irradiation successive sélective couche par couche et consolidation de couches de matériau de construction (3), où chaque couche de matériau de construction (3) comprend au moins une zone d'irradiation (IA) devant être irradiée et consolidée au moyen d'au moins un faisceau d'énergie (5),
l'unité de commande (6) étant conçue pour commander l'irradiation successive sélective couche par couche et consolidation de couches de matériau de construction (IA) respectives suivant le procédé selon l'une quelconque des revendications précédentes.

12. Appareil (1) de fabrication additive d'au moins un objet tridimensionnel (2) par irradiation successive sélective couche par couche et consolidation de couches de matériau de construction (3), où chaque couche de matériau de construction (3) comprend au moins une zone d'irradiation (IA) devant être irradiée et consolidée au moyen d'au moins un faisceau d'énergie (5), l'appareil (1) comprenant une unité de commande (6) selon la revendication 11.
